# EUROPEAN PATENT SPECIFICATION

(11) **EP 2 412 612 B1**
(45) Date of publication and mention of the grant of the patent: **20.02.2013**
(21) Application number: 11169547.4
(22) Date of filing: 10.06.2011
(51) Int. Cl.: B62D 25/08, B62D 25/20

(54) **Side sill structure for automobile**
Seitenschwellenstruktur für ein Automobil
Structure de longeron latéral pour automobile

(30) Priority: 30.07.2010 JP 2010171717
(43) Date of publication of application: 01.02.2012
(73) Proprietor: Honda Motor Co., Ltd., Tokyo 107-8556 (JP)
(72) Inventor: Asano, Sadayuki, Saitama, 351-0193 (JP)
(74) Representative: Trossin, Hans-Jürgen

(56) References cited:
- US-A- 5 641 194
- US-A- 5 782 525
- US-A1- 2010 123 337

## Description

### BACKGROUND OF THE INVENTION

### FIELD OF THE INVENTION

The present invention relates to a side sill structure for an automobile according to the preamble part of claim 1 known from US 5782 525 A.

### DESCRIPTION OF THE RELATED ART

Japanese Patent Application Laid-open No. 7-125655 has made publicly known a side sill for an automobile having the shock absorption performance for side impact enhanced by employing a structure in which a side sill outer panel and a side sill inner panel are joined together to form a closed cross section and in which the rear portion of the side sill is reinforced with a corner plate having a bead portion held between the side sill outer panel and the side sill inner panel.

In addition, Japanese Patent Application Laid-open No. 2009-29323 has made publicly known a side sill for an automobile having the shock absorption performance for side impact enhanced by employing a structure in which a rear end of a side sill outer panel and a front end of a wheel house portion are coupled to each other by use of a reinforcement member.

Meanwhile, upon receipt of an input of a crash load at a rear lateral face of an automobile, it is possible to ensure the shock absorption performance by enhancing the stiffness at a rear portion of the side sill. The foregoing conventional side sills, however, have the structures in which the stiffness at the rear portions is difficult to be enhanced sufficiently. For this reason, a further enhancement of the stiffness of the side sill is demanded.

A further side sill structure for an automobile is known from US 5 641 194 A, which disclosure covers the preamble features of claim 1.

### SUMMARY OF THE INVENTION

The present invention has been made in consideration of the foregoing circumstances, and the object thereof is to enhance the stiffness at a rear portion of a side sill with only the minimum weight increase.

In order to achieve this object, there is provided a side sill structure for an automobile according to claim 1, in which a side sill arranged at a lower lateral portion of a vehicle body of the automobile to extend in a front-rear direction includes a side-sill reinforcement member having a groove-shaped cross section and being held between an outer panel located on an outer side of the vehicle body and an inner panel located on an inner side of the vehicle body, characterized in that a rear portion of the side sill is configured to have a closed cross section by joining together the side-sill reinforcement member and a jack-up plate held between the outer panel and the inner panel, and the side-sill reinforcement member, the jack-up plate, a bulkhead and a wheel arch extension form a box structure in such a way that the bulkhead is joined to inner sides of the side-sill reinforcement member and the jack-up plate, and that the wheel arch extension is joined to the side-sill reinforcement member and the jack-up plate rearwardly of the bulkhead in the front-rear direction.

In accordance with the structure according to claim 1, the side sill arranged at the lower lateral portion of the vehicle body of the automobile to extend in the front-rear direction includes the side-sill reinforcement member having the groove-shaped cross section and being held between the outer panel located on the outer side of the vehicle body and the inner panel located on the inner side of the vehicle body. The rear portion of the side sill is configured to have the closed cross section by joining together the side-sill reinforcement member and the jack-up plate held between the outer panel and the inner panel. The side-sill reinforcement member, the jack-up plate, the bulkhead and the wheel arch extension form the box structure in such a way that the bulkhead is joined to the inner sides of the side-sill reinforcement member and the jack-up plate, and that the wheel arch extension is joined to the side-sill reinforcement member and the jack-up plate rearwardly of the bulkhead in the front-rear direction. This box structure increases the stiffness at the rear portion of the side sill and thereby enhances the shock absorption performance for side impact. Moreover, since an additional member needed for this structure is only the bulkhead, the structure can be formed with the minimum weight increase.

Furthermore, since the bulkhead is joined to the side-sill reinforcement member and the jack-up plate at the upper edge, the lower edge, the vehicle-body outer side edge and the vehicle-body inner side edge of the bulkhead, the box structure can be made even stronger.

Moreover, according to an invention described in claim 2, in addition to the structure according to claim 1, there is provided the side sill structure for an automobile, characterized in that the vehicle-body inner side edge of the bulkhead includes an inner flange joined to the jack-up plate, and the inner flange is bent to tilt with respect to a main body portion of the bulkhead at an obtuse angle.

In accordance with the structure according to claim 2, since the inner flange provided on the vehicle-body inner side edge of the bulkhead and joined to the jack-up plate is bent to tilt with respect to the main body portion of the bulkhead at an obtuse angle, a gap is less likely to occur between the jack-up plate and the inner flange than in the case where the inner flange is bent with respect to the main body portion of the bulkhead a right angle. This structure can easily absorb dimension errors.

Furthermore, according to an invention described in claim 3, in addition to the structure according to any one of claims 1 to 2, there is provided the side sill structure for an automobile, characterized by comprising a rear frame continuous with a rear end of the inner panel, characterized in that the jack-up plate is joined to the rear frame.

In accordance with the structure according to claim 3, since the jack-up plate is joined to the rear frame which is continuous with the rear end of the inner panel, the stiffness of the vehicle body around the jack-up plate can be further increased.

Moreover, according to an invention described in claim 4, in addition to the structure according to any one of claims 1 to 3, there is provided the side sill structure for an automobile, characterized in that the side-sill reinforcement member is formed of a front side-sill reinforcement member and a rear side-sill reinforcement member joined together, and the jack-up plate is joined to the rear side-sill reinforcement member.

In accordance with the structure according to claim 4, since the side-sill reinforcement member is formed of the front side-sill reinforcement member and the rear side-sill reinforcement member joined together, the rear side-sill reinforcement member has such a short length that the work for joining the jack-up plate to the rear side-sill reinforcement member can be facilitated.

Here, a front side-sill reinforcement member 22 and a rear side-sill reinforcement member 23 of an embodiment correspond to the side-sill reinforcement member of the present invention.

The above and other objects, characteristics and advantages of the present invention will be clear from detailed descriptions of the preferred embodiment which will be provided below while referring to the attached drawings.

### BRIEF DESCRIPTION OF THE DRAWINGS

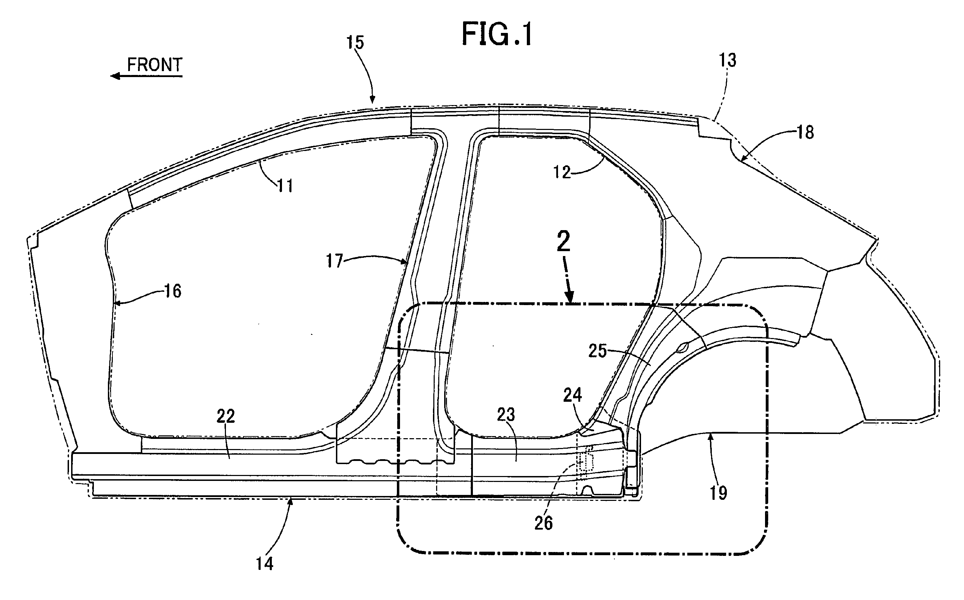

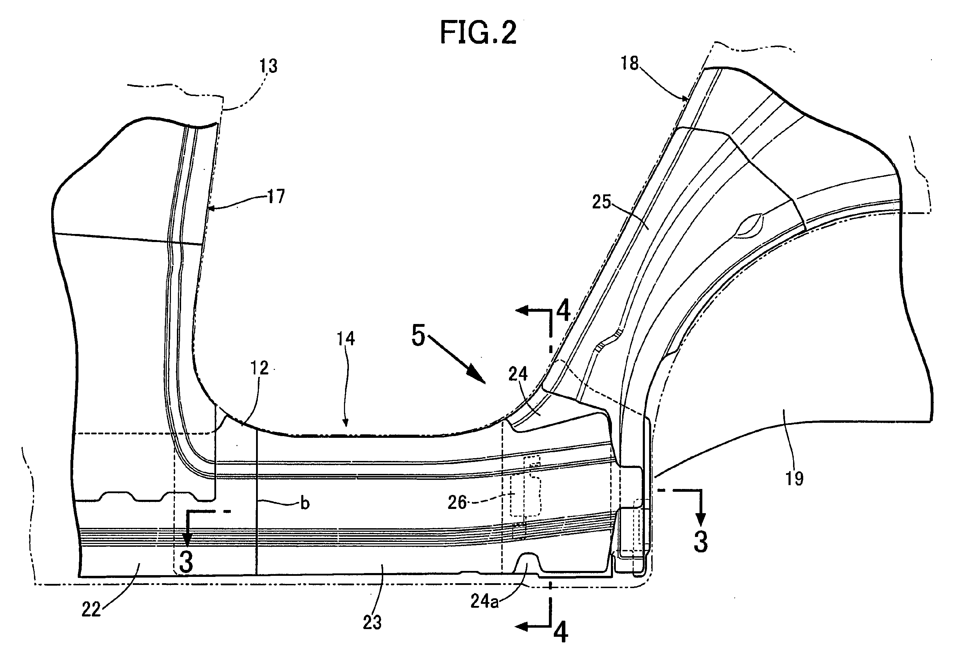

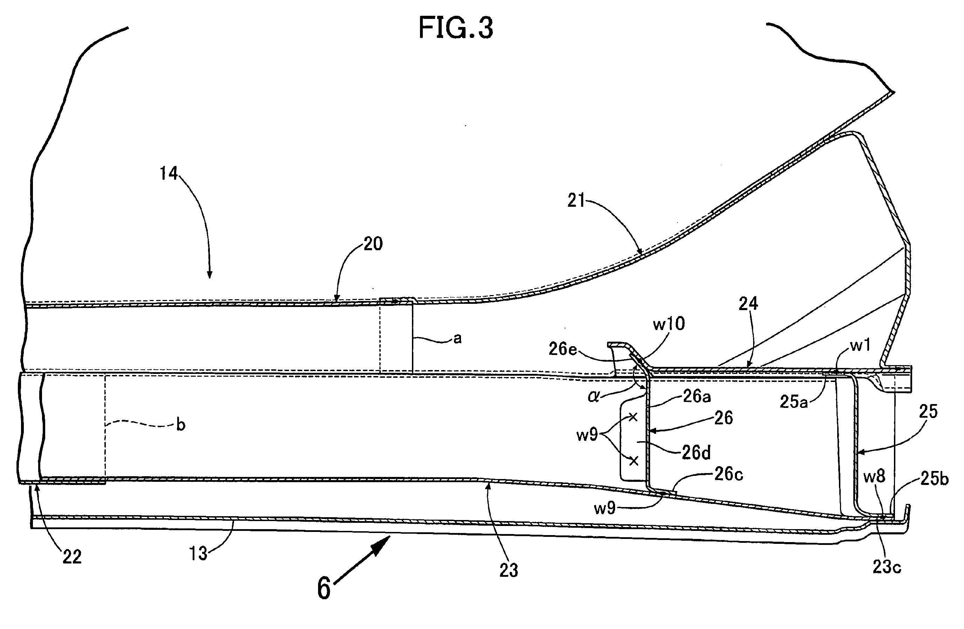

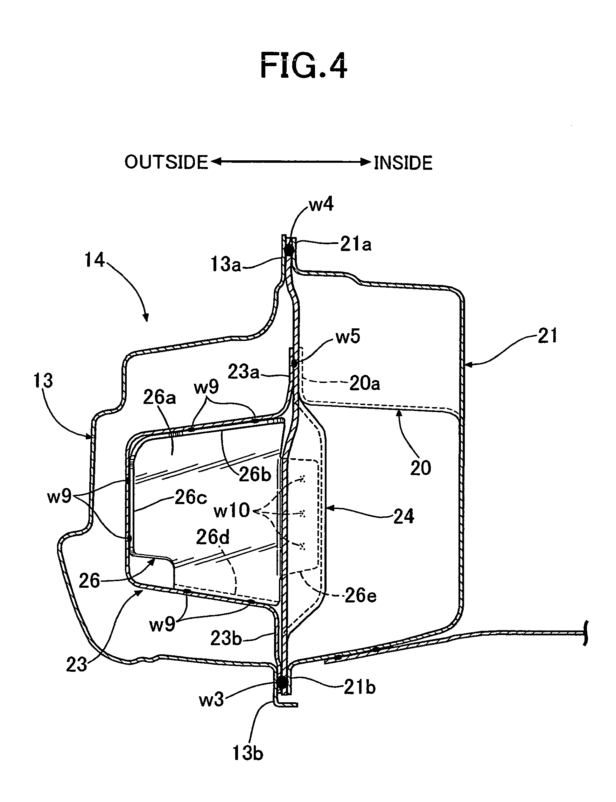

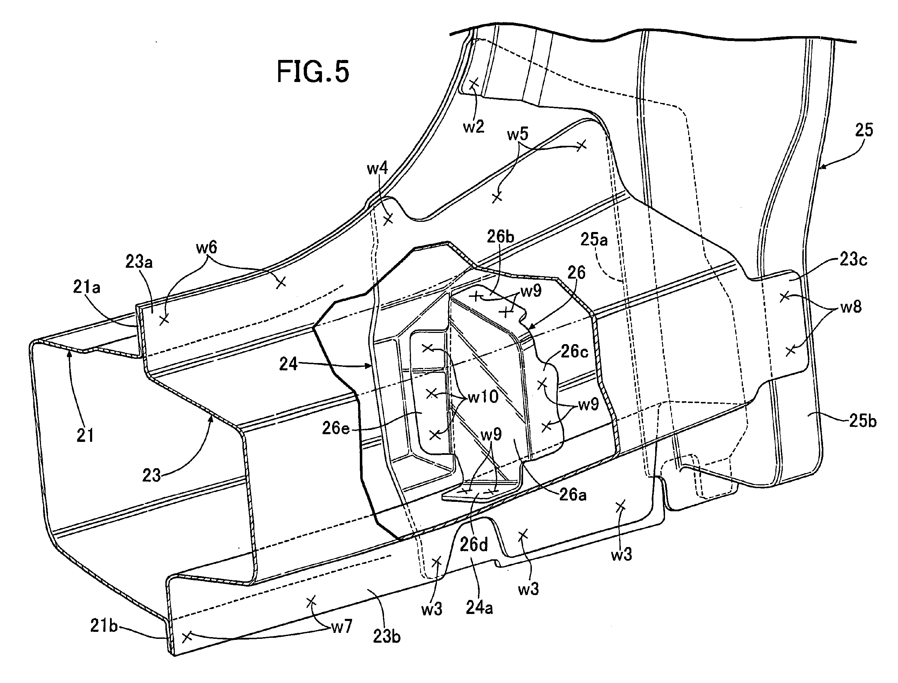

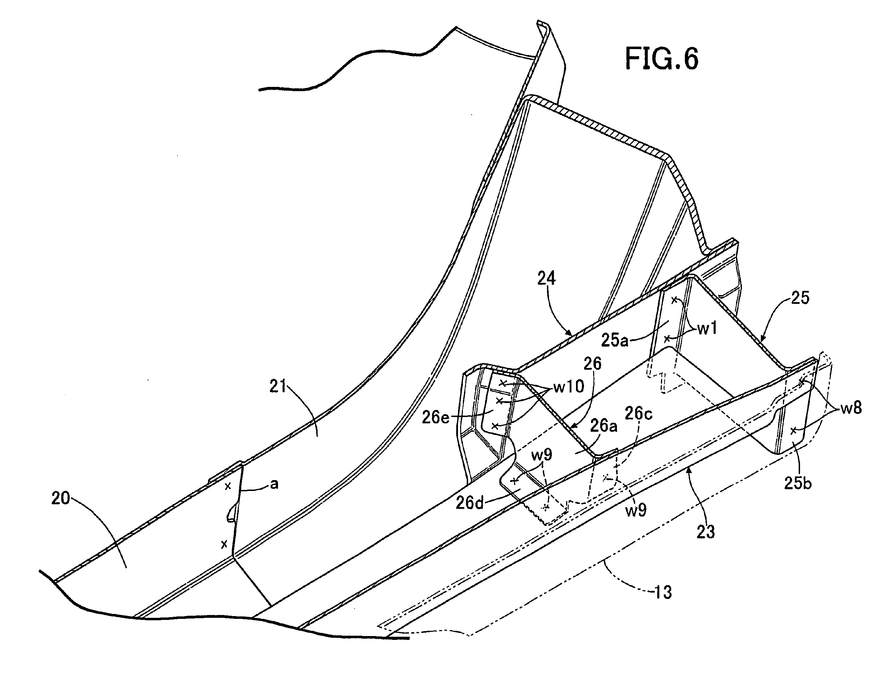

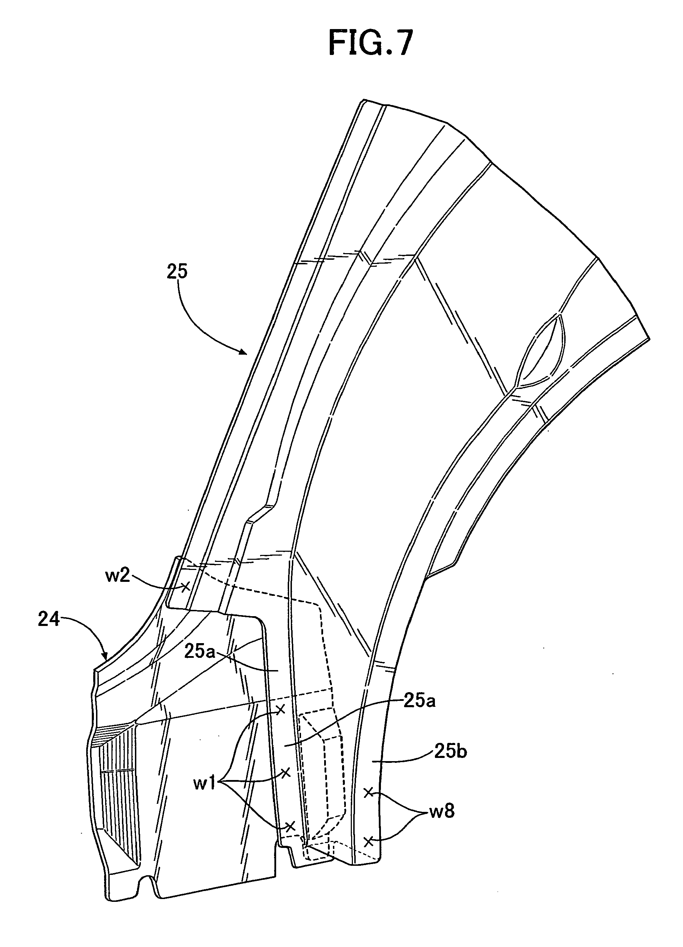

FIG. 1 is a left side view of a vehicle body with an outer panel being detached; FIG. 2 is an enlarged view of a part indicated by an arrow 2 in FIG. 1; FIG. 3 is a sectional view taken along a line 3-3 in FIG. 2; FIG. 4 is a sectional view taken along a line 4-4 in FIG. 2; FIG. 5 is a view seen from a direction of an arrow 5 in FIG. 2; FIG. 6 is a view seen from a direction of an arrow 6 in FIG. 3; and FIG. 7 is a perspective view of a jack-up plate and a wheel arch extension.

### DESCRIPTION OF PREFERRED EMBODIMENT

An embodiment of the present invention will be described below based on FIGS. 1 to 7.

FIG. 1 is a side view of a left side of a five-door hatchback type automobile at a part including a front door opening 11, a rear door opening 12 and their surroundings, and shows the view in which an outer panel 13 (see a chain line) located at the nearest place on paper is detached. The left side of a vehicle body includes: a side sill 14 extending in a front-rear direction of the vehicle body along the lower sides of the front door opening 11 and the rear door opening 12; a roof side rail 15 extending in the front-rear direction of the vehicle body along the upper sides of the front door opening 11 and the rear door opening 12; a front pillar 16 coupling front ends of the side sill 14 and the roof side rail 15 together; a center pillar 17 coupling intermediate portions, in the front-rear direction, of the side sill 14 and the roof side rail 15 together; a rear pillar 18 coupling rear ends of the side sill 14 and the roof side rail 15 together; and a rear wheel house 19.

As shown in FIGS. 2 to 6, the side sill 14 is configured to have a closed cross section in such a way that upper and lower flange portions 13a, 13b of the outer panel 13 (see FIGS. 3 and 4) having a groove-shaped cross section open to the inner side of the vehicle body are joined respectively to upper and lower flange portions 20a, 20b of an inner panel 20 having a groove-shaped cross section open to the outer side of the vehicle body. In the vicinity of the rear end of the side sill 14, a rear frame 21 (see FIGS. 3 and 6) having a groove-shaped cross section open to the outer side of the vehicle body is joined to a rear portion of the inner panel 20. The rear frame 21 is curved with the rear side extending toward the inner side of the vehicle body. FIGS. 3 and 6 show a joint portion a of the inner panel 20 and the rear frame 21.

A front side-sill reinforcement member 22 and a rear side-sill reinforcement member 23 each having a groove-shaped cross section open to the inner side of the vehicle body are held between the outer panel 13 and the inner panel 20 of the side sill 14. Ajoint portion b of the front side-sill reinforcement member 22 and the rear side-sill reinforcement member 23 are located at a front side of the rear door opening 12 (see FIG. 2).

In the vicinity of the rear end of the side sill 14, a jack-up plate 24 is held between the rear side-sill reinforcement member 23 and the rear frame 21. The jack-up plate 24 is a roughly flat plate-shaped member which is larger in thickness and higher in stiffness than the other plate members, and includes a jack-up point 24a (see FIGS. 2 and 5) which is supported by a jack when the vehicle body is jacked up.

As shown in FIG. 7, the outer surface of a rear edge of the jack-up plate 24 and the inner surface of an inner flange 25a provided at a front portion of a wheel arch extension 25 are overlaid on one another and are welded together at w1, and the outer surface of an upper end of the jack-up plate 24 and the inner surface of a front edge of the wheel arch extension 25 are overlaid on one another and are welded together at w2.

As shown in FIGS. 4 and 5, a lower end portion of the jack-up plate 24, the lower flange portion 13b of the outer panel 13, the lower flange portion 23b of the rear side-sill reinforcement member 23, and the lower flange portion 21b of the rear frame 21 are overlapped with each other in a four-ply manner and are welded together at w3, and an upper portion of the jack-up plate 24, the upper flange portion 13a of the outer panel 13, and the upper flange portion 21a of the rear frame 21 are overlapped with each other in a three-ply manner and are welded together at w4. In addition, the upper flange portion 23a of the rear side-sill reinforcement member 23 is overlaid on and welded at w5 to the outer surface of the jack-up plate 24.

As shown in FIG. 5, since the jack-up plate 24 is not present at a front side of the rear side-sill reinforcement member 23, the upper flange portion 23a, the upper flange portion 13a (not shown in FIG. 5) of the outer panel 13 and the upper flange portion 21a of the rear frame 21 are overlapped with each other and welded together at w6, and the lower flange portion 23b, the lower flange portion 13b (not shown in FIG. 5) of the outer panel 13 and the lower flange portion 21b of the rear frame 21 are overlapped with each other and welded together at w7. In addition, the inner surface of a flange portion 23c provided at a rear end of the rear side-sill reinforcement member 23 is overlaid on and welded at w8 to the outer surface of an outer flange 25b of the wheel arch extension 25 (see FIG. 5).

As is apparent from FIGS. 3 to 6, a bulkhead 26 is arranged inside a rectangular tubular space surrounded by the rear side-sill reinforcement member 23 having the groove-shaped cross section and the jack-up plate 24 having the flat plate shape. The bulkhead 26 has a plate shape facing in the front-rear direction of the vehicle body. A main body portion 26a of the bulkhead 26 is provided with an upper flange 26b formed by bending an upper edge of the bulkhead 26 rearward; an outer flange 26c formed by bending an outer side edge thereof rearward; a lower flange 26d formed by bending a lower edge thereof frontward; and an inner flange 26e formed by bending an inner side edge thereof obliquely frontward. The upper flange 26b, the outer flange 26c and the lower flange 26d are welded to the rear side-sill reinforcement member 23 at w9, and the inner flange 26e is welded to the front end of the jack-up plate 24 at w10.

As described above, a rear portion of the side sill 14 is configured to have a closed cross section with the upper flange portion 23a of the rear side-sill reinforcement member 23 held between the upper flange portion 13a of the outer panel 13 and the upper flange portion 20a of the inner panel 20, and with the lower flange portion 23b of the rear side-sill reinforcement member 23 held between the lower flange portion 13b of the outer panel 13 and the lower flange portion 20b of the inner panel 20. This structure can increase the stiffness at the rear portion of the side sill 14 and thereby can enhance the shock absorption performance for side impact.

At the rear end portion of the side sill 14, especially, the upper end and the lower end of the jack-up plate 24 having a large plate thickness are held between the upper and lower flange portions 13a, 13b of the outer panel 13 and the upper and lower flange portions 20a, 20b of the inner panel 20, respectively. In addition, the front side of the space of the closed cross section formed by the jack-up plate 24 and the rear side-sill reinforcement member 23 is closed by the bulkhead 26, and the rear side of the space of the closed cross section is closed by the wheel arch extension 25. Thus, a rectangular parallelepiped box structure is formed which has six faces surrounded by the rear side-sill reinforcement member 23, the jack-up plate 24, the bulkhead 26 and the wheel arch extension 25. This box structure further increases the stiffness of the rear portion of the side sill 14 and thereby allows a further enhancement of the shock absorption performance for side impact. Moreover, since an additional member needed for this structure is only the bulkhead 26 which is small in size, the structure can be formed with the minimum weight increase.

In addition, the bulkhead 26 is joined to the rear side-sill reinforcement member 23 at the upper flange 26b, the outer flange 26c and the lower flange 26d and is joined to the jack-up plate 24 at the inner flange 26e. Thus, the box structure can be made even stronger by having an almost entire circumference of the bulkhead 26 joined to the other members.

In the bulkhead 26, the upper flange 26b, the outer flange 26c and the lower flange 26d are joined to the rear side-sill reinforcement member 23 first and then the inner flange 26e is joined to the jack-up plate 24. Since an angle *α* (see FIG. 3) at which the inner flange 26e is tilted with respect to the main body portion 26a is set to an obtuse angle, a gap is less likely to occur between the jack-up plate 24 and the inner flange 26e than in the case where the angle *α* is a right angle. This structure can easily absorb dimension errors of the rear side-sill reinforcement member 23 and the jack-up plate 24.

Further, since the jack-up plate 24 is also joined to the rear frame 21 continuous with the rear end of the inner panel 20, the stiffness of the vehicle body around the jack-up plate 24 can be further increased.

Furthermore, a side-sill reinforcement member is formed by joining the front side-sill reinforcement member 22 and the rear side-sill reinforcement member 23 together. Accordingly, the rear side-sill reinforcement member 23 has such a short length that the work for joining the jack-up plate 24 to the rear side-sill reinforcement member 23 can be facilitated.

An embodiment of the present invention is explained above, but the present invention may be modified in a variety of ways as long as the modifications do not depart from the scope of the present invention as set forth in the appended claims.

For example, in the embodiment, the side-sill reinforcement member is divided into the front side-sill reinforcement member 22 and the rear side-sill reinforcement member 23, but it can be constituted by one member.

A bulkhead (26) is joined to inner sides of a side-sill reinforcement member (23) and a jack-up plate (24), which are joined together to form a closed cross section at a rear portion of a side sill (14), and a wheel arch extension (25) is joined to the side-sill reinforcement member (23) and the jack-up plate (24) rearwardly of the bulkhead (26), so that the side-sill reinforcement member (23), the jack-up plate (24), the bulkhead (26) and the wheel arch extension (25) form a box structure. This box structure increases the stiffness at the rear portion of the side sill (14) and thereby enhances the shock absorption performance for side impact. Moreover, since an additional member needed for this structure is only the bulkhead (26), the structure can be formed with the minimum weight increase.

## Claims

1. A side sill structure for an automobile in which a side sill (14) arranged at a lower lateral portion of a vehicle body of the automobile to extend in a front-rear direction includes a side-sill reinforcement member (22, 23) having a groove-shaped cross section and being held between an outer panel (13) located on an outer side of the vehicle body and an inner panel (20) located on an inner side of the vehicle body, wherein
a rear portion of the side sill (14) is configured to have a closed cross section by joining together the side-sill reinforcement member (22, 23) and a jack-up plate (24) held between the outer panel (13) and the inner panel (20), and
the side-sill reinforcement member (22, 23), the jack-up plate (24), a bulkhead (26) and a wheel arch extension (25) form a box structure in such a way that the bulkhead (26) is joined to inner sides of the side-sill reinforcement member (22, 23) and the jack-up plate (24), and that the wheel arch extension (25) is joined to the side-sill reinforcement member (22, 23) and the jack-up plate (24) rearwardly of the bulkhead (26) in the front-rear direction,
**characterized in that** the bulkhead (26) is joined to the side-sill reinforcement member (22, 23) and the jack-up plate (24) at an upper edge, a lower edge, a vehicle-body outer side edge and a vehicle-body inner side edge of the bulkhead (26).

2. The side sill structure for an automobile according to claim 1,
**characterized in that** the vehicle-body inner side edge of the bulkhead (26) includes an inner flange (26e) joined to the jack-up plate (24), and
the inner flange (26e) is bent to tilt with respect to a main body portion (26a) of the bulkhead (26) at an obtuse angle.

3. The side sill structure for an automobile according to any one of claims 1 to 2,
**characterized by** comprising a rear frame (21) continuous with a rear end of the inner panel (20),
**characterized in that** the jack-up plate (24) is joined to the rear frame (21).

4. The side sill structure for an automobile according to any one of claims 1 to 3,
**characterized in that** the side-sill reinforcement member is formed of a front side-sill reinforcement member (22) and a rear side-sill reinforcement member (23) joined together, and
the jack-up plate (24) is joined to the rear side-sill reinforcement member (23).

## Patentansprüche

1. Seitenschwellenstruktur für ein Fahrzeug, in welcher eine Seitenschwelle (14), welche an einem unteren seitlichen Abschnitt einer Fahrzeugkarosserie des Fahrzeugs angeordnet ist, um sich in einer Längsrichtung zu erstrecken, ein Seitenschwellenverstärkungselement (22, 23) umfasst, welches einen rinnenförmigen Querschnitt aufweist und zwischen einer äußeren Platte (13), welche sich an einer äußeren Seite der Fahrzeugkarosserie befindet, und einer inneren Platte (20), welche sich an einer inneren Seite der Fahrzeugkarosserie befindet, gehalten ist, wobei
ein hinterer Abschnitt der Seitenschwelle (14) konfiguriert ist, einen geschlossenen Querschnitt durch Verbinden des Seitenschwellenverstärkungselements (22, 23) mit einer Abstützplatte (24), welche zwischen der äußeren Platte (13) und der inneren Platte (20) gehalten ist, aufzuweisen, und
das Seitenschwellenverstärkungselement (22, 23), die Abstützplatte (24), ein Schott (26) und eine Radlaufverlängerung (25) eine Kastenstruktur derart bilden, dass das Schott (26) mit inneren Seiten des Seitenschwellenverstärkungselements (22, 23) und der Abstützplatte (24) verbunden ist und dass die Radlaufverlängerung (25) mit dem Seitenschwellenverstärkungselement (22, 23) und der Abstützplatte (24) rückwärts des Schotts (26) in Längsrichtung verbunden ist,
**dadurch gekennzeichnet, dass** das Schott (26) mit dem Seitenschwellenverstärkungselement (22, 23) und der Abstützplatte (24) an einem oberen Rand, einem unteren Rand, einem Fahrzeugkarosserieaußenseitenrand und einem Fahrzeugkarosserieinnenseitenrand des Schotts (26) verbunden ist.

2. Seitenschwellenstruktur für ein Fahrzeug nach Anspruch 1,
**dadurch gekennzeichnet, dass** der Fahrzeugkarosserieinnenseitenrand des Schotts (26) einen inneren Flansch (26e) umfasst, welcher mit der Abstützplatte (24) verbunden ist, und der innere Flansch (26e) gebogen ist, um bezüglich eines Hauptkörperabschnitts (26a) des Schotts (26) in einem stumpfen Winkel geneigt zu sein.

3. Seitenschwellenstruktur für ein Fahrzeug nach einem der Ansprüche 1 bis 2, **gekennzeichnet durch** Umfassen eines hinteren Rahmens (21), welcher durchgängig mit einem hinteren Ende der inneren Platte (20) ist,
**dadurch** gekennzeichnet, dass die Abstützplatte (24) mit dem hinteren Rahmen (21) verbunden ist.

4. Seitenschwellenstruktur für ein Fahrzeug nach einem der Ansprüche 1 bis 3,
**dadurch gekennzeichnet, dass** das Seitenschwellenverstärkungselement aus einem vorderen Seitenschwellenverstärkungselement (22) und einem hinteren Seitenschwellenverstärkungselement (23) gebildet ist, welche miteinander verbunden sind, und
dass die Abstützplatte (24) mit dem hinteren Seitenschwellenverstärkungselement (23) verbunden ist.

## Revendications

1. Structure de longeron latéral pour automobile dans lequel un longeron latéral (14) agencé sur une portion latérale inférieure d'une carrosserie de véhicule de l'automobile pour s'étendre dans une direction avant-arrière comprend un organe de renforcement de longeron latéral (22, 23) ayant une section en forme de rainure et étant maintenu entre un panneau externe (13) situé sur un côté externe de la carrosserie de véhicule et un panneau interne (20) situé sur un côté interne de la carrosserie de véhicule, dans laquelle
une portion arrière du longeron latéral (14) est configurée pour avoir une section fermée en assemblant l'organe de renforcement de longeron latéral (22, 23) et une plaque autoélévatrice (24) maintenue entre le panneau externe (13) et le panneau interne (20), et
l'organe de renforcement de longeron latéral (22, 23), la plaque autoélévatrice (24), une cloison (26) et un prolongement de passage de roue (25) forment une structure de caisson de telle sorte que la cloison (26) est reliée à des côtés internes de l'organe de renforcement de longeron latéral (22, 23) et à la plaque autoélévatrice (24), et que le prolongement de passage de roue (25) est relié à l'organe de renforcement de longeron latéral (22, 23) et à la plaque autoélévatrice (24) vers l'arrière de la cloison (26) dans la direction avant-arrière,
**caractérisée en ce que** la cloison (26) est reliée à l'organe de renforcement de longeron latéral (22, 23) et à la plaque autoélévatrice (24) sur un bord supérieur, un bord inférieur, un bord latéral externe de carrosserie de véhicule et un bord latéral interne de carrosserie de véhicule de la cloison (26).

2. Structure de longeron latéral pour automobile selon la revendication 1,
**caractérisée en ce que** le bord latéral interne de carrosserie de véhicule de la cloison (26) comprend une bride interne (26e) reliée à la plaque autoélévatrice (24), et
la bride interne (26e) est pliée pour s'incliner par rapport à une portion de carrosserie principale (26a) de la cloison (26) à un angle obtus.

3. Structure de longeron latéral pour automobile selon l'une quelconque des revendications 1 à 2,
**caractérisée en ce qu'**elle comprend un châssis arrière (21) continu avec une extrémité arrière du panneau interne (20),
**caractérisée en ce que** la plaque autoélévatrice (24) est reliée au châssis arrière (21).

4. Structure de longeron latéral pour automobile selon l'une quelconque des revendications 1 à 3,
**caractérisée en ce que** l'organe de renforcement de longeron latéral est formé d'un organe de renforcement de longeron latéral avant (22) et d'un organe de renforcement de longeron latéral arrière (23) assemblés, et
la plaque autoélévatrice (24) est reliée à l'organe de renforcement de longeron latéral arrière (23).
